(19) Europäisches Patentamt
European Patent Office
Office européen des brevets

(11) Veröffentlichungsnummer: **0 056 492**
**B1**

# EUROPÄISCHE PATENTSCHRIFT

(12)

(45) Veröffentlichungstag der Patentschrift: **12.12.84**

(51) Int. Cl.³: **C 09 K 3/34**, C 09 B 1/20, C 09 B 1/50, C 09 B 1/56

(21) Anmeldenummer: **81110791.1**

(22) Anmeldetag: **28.12.81**

(54) **Farbstoffe für Flüssigkristallmischungen.**

(30) Priorität: **10.01.81 DE 3100533**
**15.04.81 DE 3115147**

(43) Veröffentlichungstag der Anmeldung:
**28.07.82 Patentblatt 82/30**

(45) Bekanntmachung des Hinweises auf die Patenterteilung:
**12.12.84 Patentblatt 84/50**

(84) Benannte Vertragsstaaten:
**CH DE FR GB IT LI**

(56) Entgegenhaltungen:
**EP - A - 0 038 460**
**DE - A - 1 644 428**
**DE - B - 1 127 911**
**FR - A - 2 035 130**
**FR - A - 2 132 242**
**FR - A - 2 426 724**
**GB - A - 1 001 497**
**GB - A - 2 071 685**

(73) Patentinhaber: **BASF Aktiengesellschaft, Carl-Bosch-Strasse 38, D-6700 Ludwigshafen (DE)**

(72) Erfinder: **Ditter, Walter, Feuerbachstrasse 7, D-6900 Heidelberg (DE)**
Erfinder: **Etzbach, Karl-Heinz, Dr., Elisabethstrasse 11, D-6800 Mannheim (DE)**
Erfinder: **Horn, Dieter, Dr., Schroederstrasse 69, D-6900 Heidelberg (DE)**
Erfinder: **Patsch, Manfred, Dr., Fritz-Wendel-Strasse 4, D-6706 Wachenheim (DE)**
Erfinder: **Ellingsfeld, Heinz, Dr., Pierstrasse 9 A, D-6710 Frankenthal (DE)**

EP 0 056 492 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

**Beschreibung**

Die Erfindung betrifft die Verwendung von Farbstoffen der allgemeinen Formel I

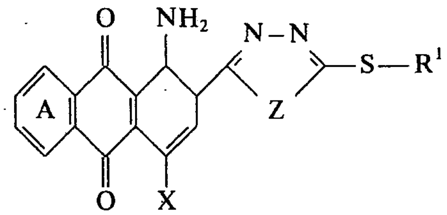

in der

X Wasserstoff, Hydroxy, Nitro, Phenylmercapto oder gegebenenfalls substituiertes Amino,
Z O oder S,
$R^1$ Wasserstoff oder gegebenenfalls substituiertes Alkyl oder Cycloalkyl sind und wobei der Ring A noch substituiert sein kann, in Flüssigkristalle enthaltenden elektrooptischen Anzeigen.

Reste $R^1$ sind beispielsweise gegebenenfalls durch Sauerstoff und/oder Schwefel unterbrochenes $C_1$- bis $C_8$-Alkyl, $C_5$- bis $C_7$-Cycloalkyl oder durch gegebenenfalls durch Sauerstoff und/oder Schwefel unterbrochenes $C_1$- bis $C_{12}$-Alkyl, $C_1$- bis $C_{12}$-Alkoxy, Phenoxy, Phenylalkyloxy, Phenoxyalkyl, $C_1$- bis $C_8$-Alkanoyloxy, Benzoyloxy, Phenylalkyl, Phenyl, Diphenyl, Cyclohexyl, Cyclohexylalkoxy, Carbonester, Cyan, Styryl, Cyanstyryl oder Chlor substituiertes Aralkyl.

Einzelne Reste $R^1$ sind z. B.: Methyl, Ethyl, Butyl, n-Octyl, Cyclohexyl, 2-Methoxyethyl, Phenylmethyl, 2-Phenylethyl, 2-Phenoxyethyl, 4-Cyanphenyl-methyl, 4-Phenoxyphenyl-methyl, 4-(Phenylmethoxy)-phenylmethyl oder 4-(2-Phenylethyl)-phenylmethyl, 4-Acetoxyphenyl-methyl, 4-Butyryloxyphenyl-methyl, 4-Capronyloxyphenyl-methyl, 4-Benzoyloxyphenyl-methyl oder 4-(Cyclohexylmethoxy)-phenylmethyl.

Reste X sind beispielsweise Wasserstoff, Amino, Methylamino, Butylamino, Octylamino, Cyclohexylamino, Phenylmethylamino, Phenylamino, 4-Ethylphenylamino, 4-Butylphenylamino, 4-Chlorphenylamino, Hydroxy, Phenylthio oder Nitro.

Der Ring A kann beispielsweise noch durch Chlor, Brom oder einen Rest X substituiert sein.

Bevorzugte Substituenten für $R^1$ sind z. B. 2-Methoxyethyl, 2-Butoxyethyl, Butyl, Phenylmethyl, 4-Butyryloxyphenyl-methyl, 4-Benzoyloxyphenyl-methyl, 4-Phenoxyphenylmethyl, 4-(Phenylmethoxy)-phenylmethyl, 4-Diphenylmethyl, Cyclohexyl oder 4-(Cyclohexylmethoxy)-phenylmethyl.

Flüssigkristallmischungen und ihre Verwendung sind z. B. schon aus den deutschen Offenlegungsschriften 2 902 177, 2 903 095 und 2 950 944 bekannt. In diesen Offenlegungsschriften sind auch weitere Literatur und die theoretischen Grundlagen der erfindungsgemäßen Verwendung erörtert.

Gegenüber den bisher für die erfindungsgemäße Verwendung vorgeschlagenen Verbindungen zeichnen sich die Verbindungen der Formel I durch ein besonders hohes dichroitisches Verhältnis, gute Lichtechtheit und gute Löslichkeit in flüssigkristallinen Medien aus. Sie lassen sich weiterhin leicht in reiner Form gewinnen.

Dies gilt auch gegenüber den in der FR-A-2 426 724 beschriebenen Anthrachinonverbindungen.

Die Farbstoffe können nach bekannten Verfahren hergestellt werden.

Die Messungen wurden in der nematischen Phase der Firma Merck ZLJ-1691 durchgeführt.

Beispiele 1—3 sind folgende Anthrachinonfarbstoffe:

| Beispiel | | Farbe |
|---|---|---|
| 1 | 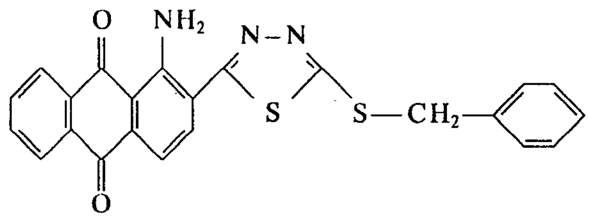 | rot |
| 2 | 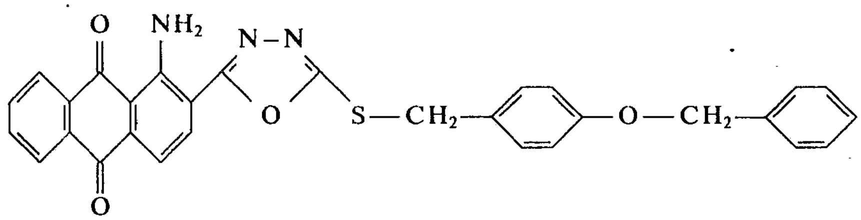 | rot |
| 3 | 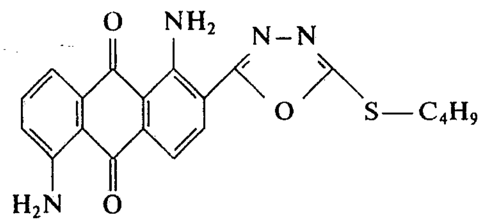 | rot |

Die Messungen wurden an einem Spektralphotometer der Fa. Hewlett-Packard 8450 durchgeführt. Das dichroitische Verhältnis CR wurde durch Messung der Extinktionen E parallel ($E''$) und E senkrecht ($E^{\perp}$) nach der Beziehung

$$CR = \frac{E''}{E^{\perp}}$$

ermittelt. Hierzu wurden handelsübliche Meßzellen mit einer Schichtdicke von 10 $\mu$m eingesetzt.

Der Ordnungsgrad S wurde nach der bekannten Gleichung

$$S = \frac{CR - 1}{CR + 2}$$

berechnet.

In der Figur 1 sind die Absorptionsspektren in parallel und senkrecht polarisiertem Licht für Verbindung 1 dargestellt.

In der Tabelle 1 sind für die Farbstoffe 1 bis 3 das dichroitische Verhältnis und der Ordnungsgrad zusammengestellt.

Tabelle 1

| Farbstoff | CR | S |
|---|---|---|
| 1 | 11,5 | 0,78 |
| 2 | 11,0 | 0,77 |
| 3 | 11,7 | 0,78 |

Die folgenden Verbindungen 4, 5 und 7 bis 10 sind blau, die Verbindung 6 ist rot.

4 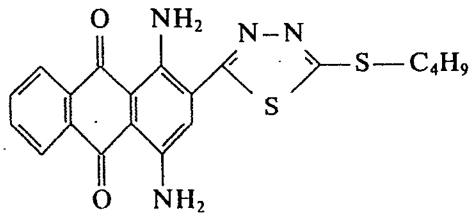

5 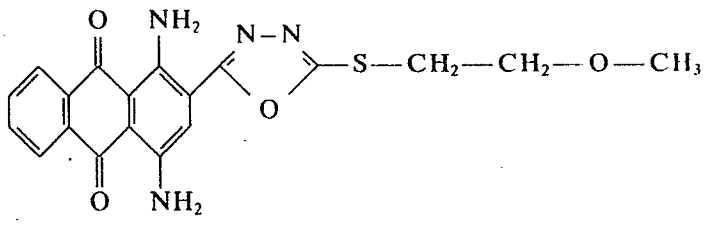

6 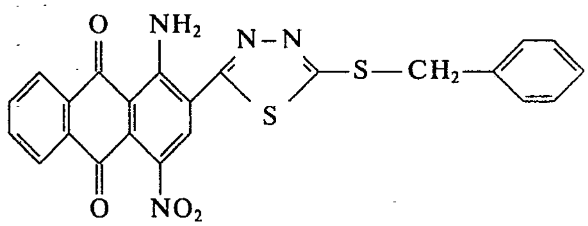

7 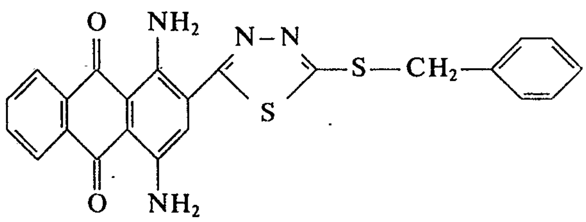

8 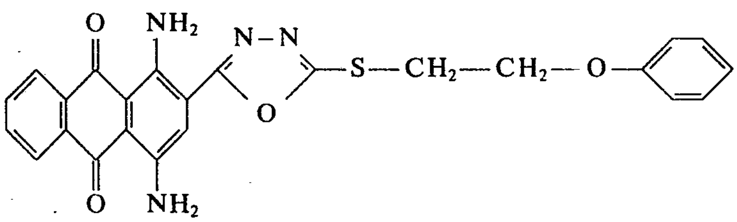

9 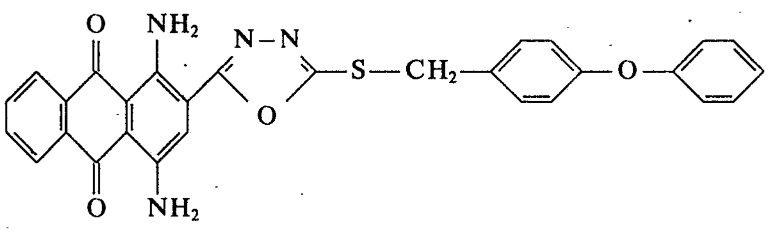

10 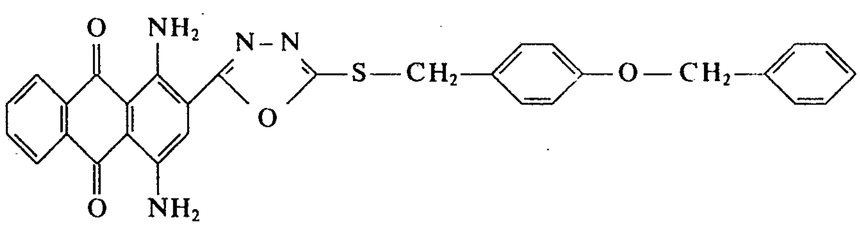

In der Figur 2 sind die Absorptionsspektren in parallelem und senkrecht polarisiertem Licht für Verbindung 7 dargestellt.

In der Tabelle 2 sind für die Farbstoffe 4 bis10 das dichroitische Verhältnis und der Ordnungsgrad zusammengestellt.

Tabelle 2

| Farbstoff | CR | S |
|---|---|---|
| 4 | 10,0 | 0,75 |
| 5 | 10,7 | 0,76 |
| 6 | 9,1 | 0,73 |
| 7 | 12,9 | 0,79 |
| 8 | 11,3 | 0,77 |
| 9 | 9,1 | 0,73 |
| 10 | 12,8 | 0,80 |

Im folgenden sind weitere wertvolle Verbindungen aufgeführt, die das in der Tabelle 3 angegebene dichroitische Verhältnis und den aufgeführten Ordnungsgrad haben.

| Beispiel | | Farbe |
|---|---|---|
| 11 | 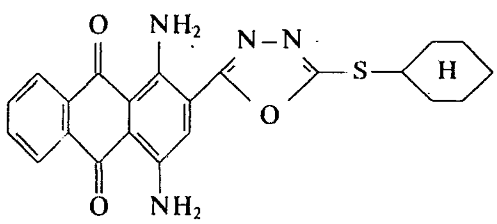 | blau |
| 12 | 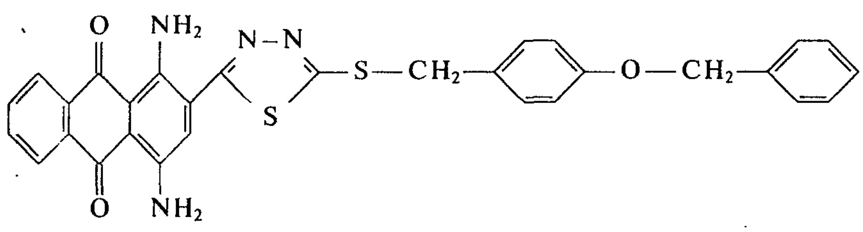 | blau |
| 13 | 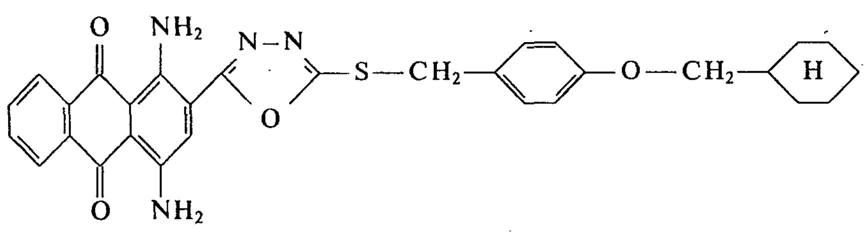 | blau |
| 14 | 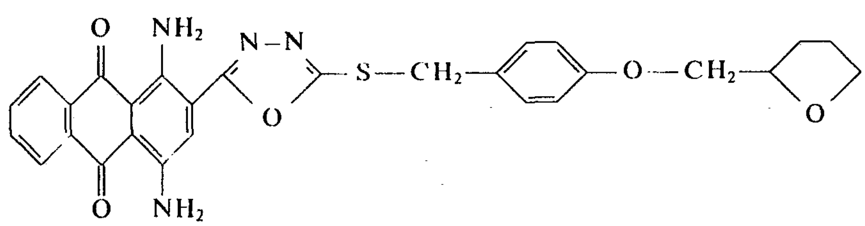 | blau |

Fortsetzung

| Beispiel | | Farbe |
|---|---|---|
| 15 | 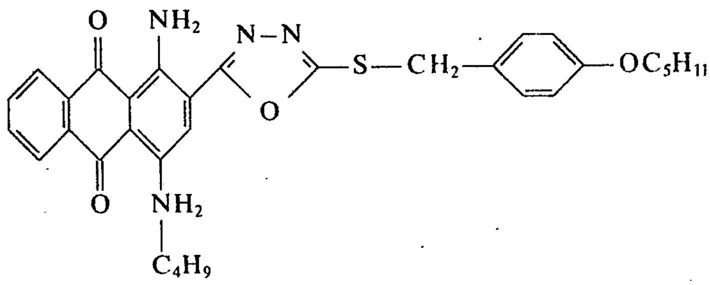 | blau |
| 16 | 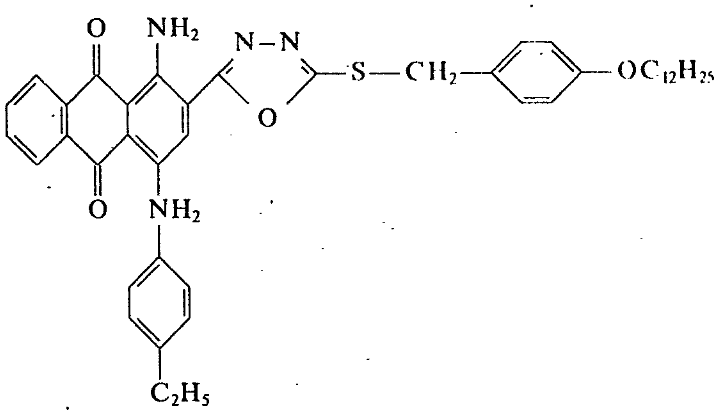 | blau |
| 17 | 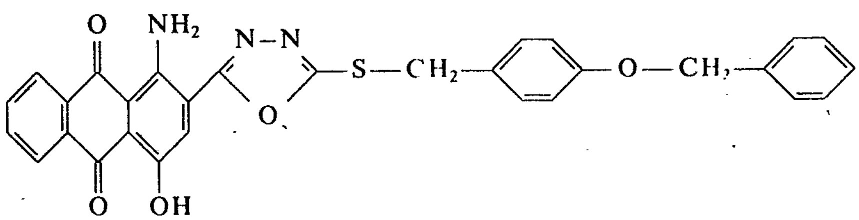 | violett |

Tabelle 3

| Farbstoff | CR | S |
|---|---|---|
| 11 | 8,9 | 0,73 |
| 12 | 12,8 | 0,80 |
| 13 | 12,4 | 0,79 |
| 14 | 11,3 | 0,77 |
| 15 | 10,7 | 0,76 |
| 16 | 10,0 | 0,75 |
| 17 | 11,6 | 0,78 |

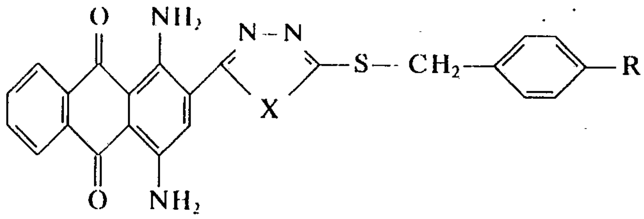

| Nr. | X | R | Farbe |
|---|---|---|---|
| 18 | O | $-C_4H_9$ | blau |
| 19 | O | $-C(CH_3)_3$ | blau |
| 20 | O | $-C_6H_{13}$ | blau |
| 21 | O | $-C_8H_{17}$ | blau |
| 22 | O | $-CH_2CH(C_2H_5)(C_4H_9)$ | blau |
| 23 | O | $-C_9H_{19}$ | blau |
| 24 | O | $-C_{13}H_{27}$ | blau |
| 25 | O | 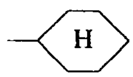 | blau |
| 26 | O | 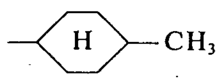 | blau |
| 27 | O | 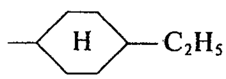 | blau |
| 28 | O | 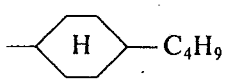 | blau |
| 29 | S | $-C_4H_9$ | blau |
| 30 | S | $-C(CH_3)_3$ | blau |
| 31 | S | $-C_6H_{13}$ | blau |
| 32 | S | $-C_8H_{17}$ | blau |
| 33 | S | $-CH_2CH(C_2H_5)(C_4H_9)$ | blau |
| 34 | S | $-C_9H_{19}$ | blau |
| 35 | S | $-C_{13}H_{27}$ | blau |
| 36 | S | 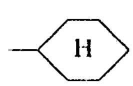 | blau |

Fortsetzung

| Nr. | X | R | Farbe |
|---|---|---|---|
| 37 | S | 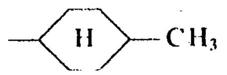 | blau |
| 38 | S | 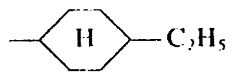 | blau |
| 39 | S | 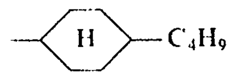 | blau |

Die Verbindungen 18 bis 39 zeichnen sich durch eine besonders hohe Löslichkeit in Flüssigkristallmischungen, z. B. ZLI-1691 oder ZLI 1840 (Merck) aus. Die Ordnungsgrade S liegen im Bereich von 0,77 bis 0,8.

Weitere Verbindungen mit hoher Löslichkeit sind die Verbindungen der Beispiele 18 bis 39, bei denen die 4-Aminogruppe durch $C_6H_5NH$ oder Alkyl–$C_6H_4NH$– ersetzt ist, wobei Alkyl 1 bis 13 C-Atome hat und vorzugsweise in p-Stellung steht.

**Patentansprüche**

1. Verwendung von Farbstoffen der allgemeinen Formel I

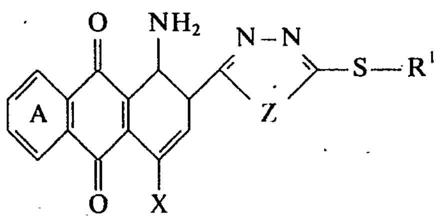

in der

X Wasserstoff, Hydroxy, Nitro, Phenylmercapto oder gegebenenfalls substituiertes Amino,
Z O oder S,
$R^1$ Wasserstoff oder gegebenenfalls substituiertes Alkyl oder Cycloalkyl sind und wobei der Ring A noch substituiert sein kann, in Flüssigkristalle enthaltenden elektrooptischen Anzeigen.

2. Verwendung gemäß Anspruch 1, dadurch gekennzeichnet, daß die Farbstoffe der Formel I entsprechen, in der X $NH_2$ ist und Z und $R^1$ die angegebene Bedeutung haben.

3. Verwendung gemäß Anspruch 1, dadurch gekennzeichnet, daß die Farbstoffe der Formel

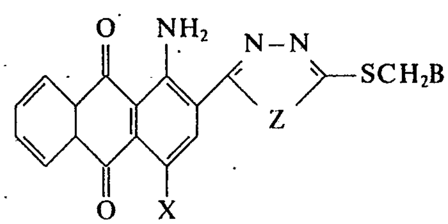

entsprechen, in der X und Z die angegebene Bedeutung haben und B gegebenenfalls substituiertes Phenyl ist.

4. Verwendung gemäß Anspruch 1, dadurch gekennzeichnet, daß die Farbstoffe der Formel gemäß Anspruch 3 entsprechen, wobei X $NH_2$ ist und B die angegebene Bedeutung hat.

**Claims**

1. The use of a dye of the general formula I

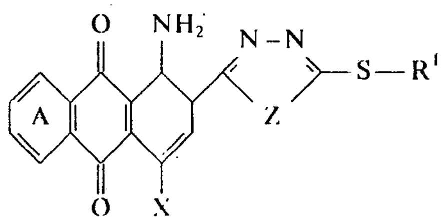

where X is hydrogen, hydroxyl, nitro, phenylmercapto or unsubstituted or substituted amino, Z is O or S, and $R^1$ is hydrogen or unsubstituted or substituted alkyl or cycloalkyl, and the ring A can be additionally substituted, in electro-optical displays containing liquid crystals.

2. The use as claimed in claim 1, wherein the dye is of the formula I where X is $NH_2$, and Z and $R^1$ have the specified meanings.

3. The use as claimed in claim 1, wherein the dye is of the formula

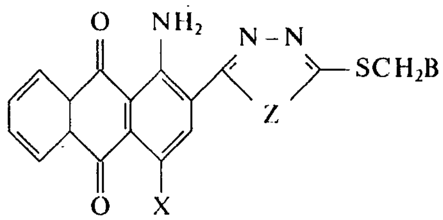

where X and Z have the specified meanings, and B is unsubstituted or substituted phenyl.

4. The use as claimed in claim 1, wherein the dye is of the formula given in claim 3, where X is $NH_2$ and B has the specified meaning.

**Revendications**

1. Utilisation de colorants de formule générale I

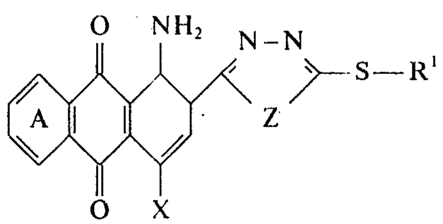

(I)

dans laquelle

X est un atome d'hydrogène ou un radical hydroxy, nitro, phénylmercapto ou amino éventuellement substitué,
Z est mis pour O ou S,
$R^1$ est un atome d'hydrogène ou un radical alcoyle ou cycloalcoyle éventuellement substitué, le noyau A pouvant être encore substituté,
dans des dispositifs d'affichage électro-optiques contenant des cristaux liquides.

2. Utilisation selon la revendication 1, caractérisée en ce que les colorants correspondent à la formule I dans laquelle X est mis pour $NH_2$ et Z et $R^1$ ont les significations indiquées.

3. Utilisation selon la revendication 1, caractérisée en ce que les colorants répondent à la formule

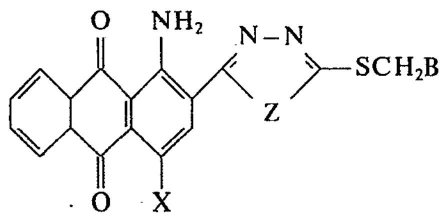

dans laquelle X et Z ont les significations indiquées et B est un phényle éventuellement substitué.

4. Utilisation selon la revendication 1, caractérisée en ce que les colorants répondent à la formule selon la revendication 3, X étant mis pour $NH_2$ et B ayant la siginification indiquée.

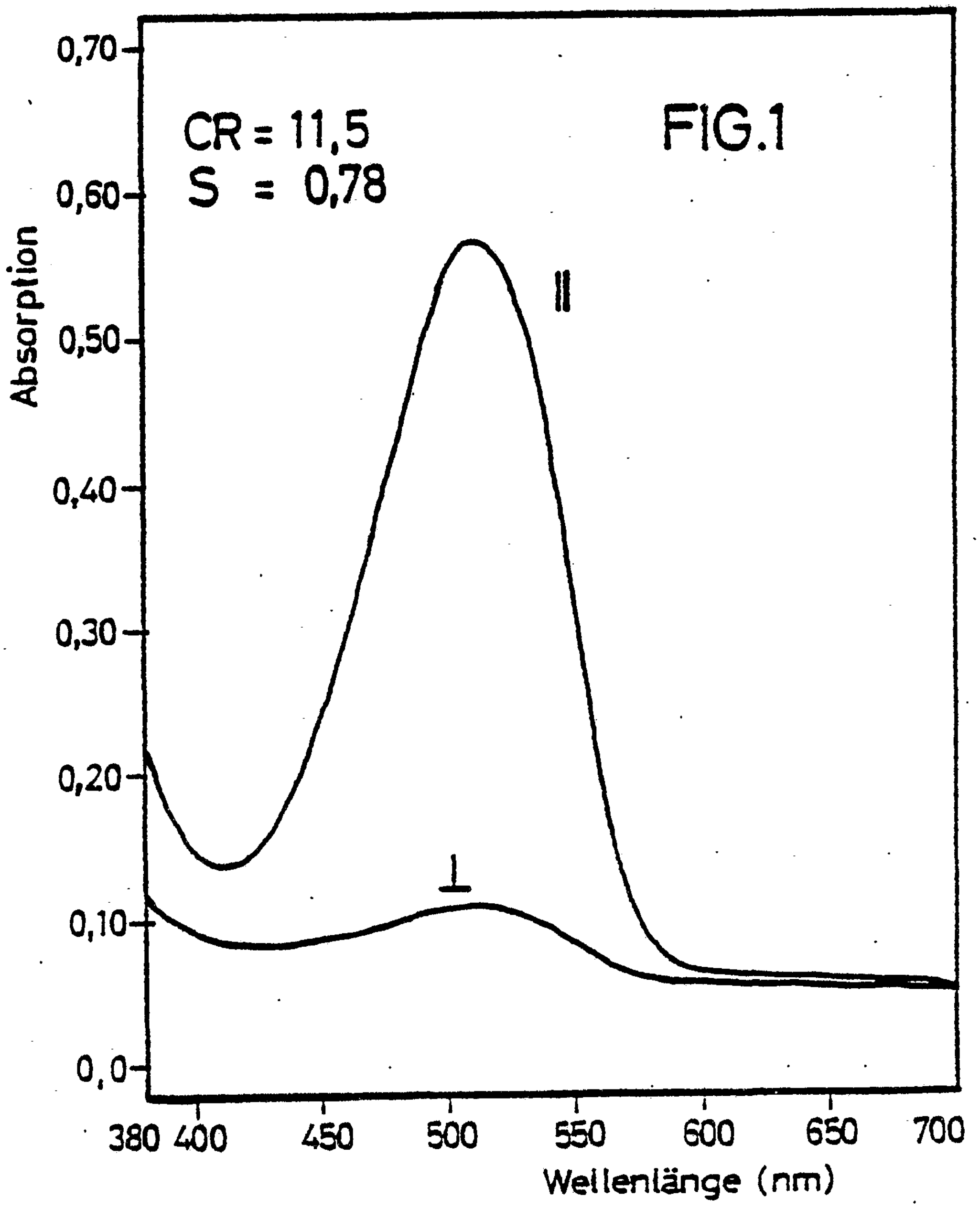
0,70
0,60
0,50
0,40
0,30
0,20
0,10
0,0
Absorption
CR = 11,5
S = 0,78
FIG.1
II
⊥
380 400
450
500
550
600
650
700
Wellenlänge (nm)

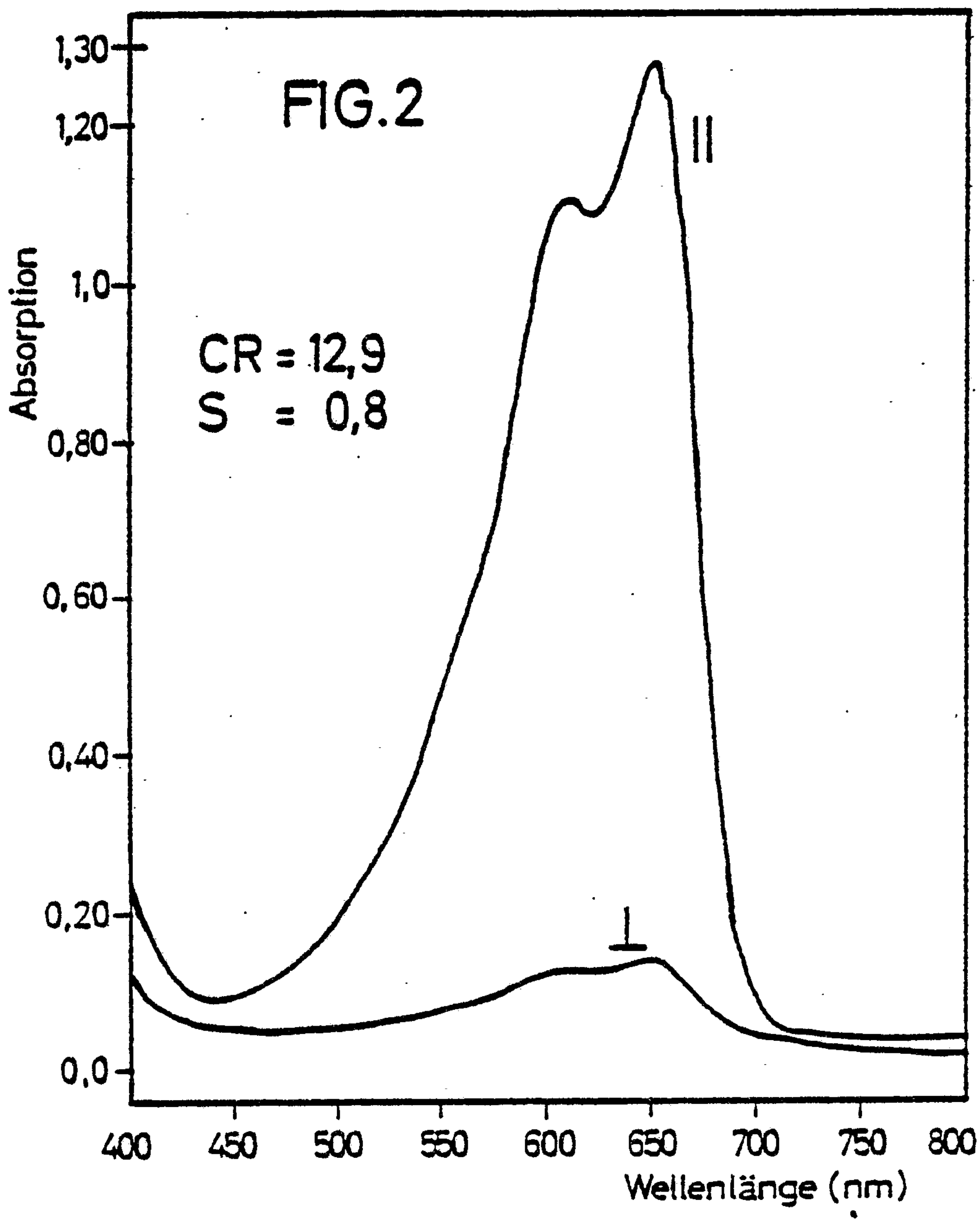

FIG.2
Absorption
1,30
1,20
1,0
0,80
0,60
0,40
0,20
0,0
CR = 12,9
S = 0,8
II
I
400
450
500
550
600
650
700
750
800
Wellenlänge (nm)